# EUROPEAN PATENT APPLICATION

(11) **EP 4 553 782 A1**
(43) Date of publication of application: **14.05.2025**
(21) Application number: 23214166.3
(22) Date of filing: 05.12.2023
(51) Int. Cl.: G06V 10/74

(54) **VEHICLE, APPARATUS, COMPUTER PROGRAM, AND METHOD FOR DETECTING AN OUT-OF-DISTRIBUTION OBJECT**

(30) Priority: 08.11.2023 EP 23208479
(71) Applicant: Continental Automotive Technologies GmbH, 30175 Hannover (DE)
(72) Inventor: Shoeb, Youssef Omar, 81739 München (DE); Schwalbe, Gesina, 81739 München (DE); Rümpelein, Oliver, 81739 München (DE)
(74) Representative: Continental Corporation

(57) **Abstract**

Embodiments of the present disclosure relate to a vehicle, an apparatus, a computer program, and a method for detecting an out-of-distribution (OOD) object. The method comprises obtaining first sensor data of an object at a first point in time and second sensor data of the object at a second point in time. Further, the method comprises determining an attribute of the object using the first sensor data and determining the attribute of the object using the second sensor data. As well, the method provides for determining if the object is an OOD object based on a semantic similarity of the attribute for the first and the second sensor data.

## Description

Embodiments of the present disclosure relate to a vehicle, an apparatus, a computer program, and a method for detecting an out-of-distribution (OOD) object. In particular, the present disclosure provides an approach for detecting OOD objects in automotive applications, e.g., for autonomous or assisted driving.

### Background:

Object Detection for advanced driver-assistance systems (ADAS) and (highly) automated driving ((H)AD) automotive systems for automated and highly automated driving (AD, HAD) rely on techniques for environment perception.

For this, deep neural networks (DNN) for object detection (OD) may be used. OD may provide for processing a temporal sequence of sensor inputs or sensor data, such as images from a video sequence, as input, and from these predict as outputs
(1) localization information, such as bounding boxes or pixel masks, and
(2) class information of objects in the image.

DNN-based OD functions provide for an object candidate a score for how certain this object belongs to a class from a limited set of pre-defined classes (so-called (class) logits). High scores are often associated with high "confidence" of the model regarding the class prediction.

### The Need for Out-of-distribution Detection for (H)AD

Autonomous driving (AD) and highly automated driving (HAD) systems rely on accurate perception of the environment to ensure safety. The state-of-the-art approach to implementing this perception is using DNNs for object detection (OD), which showed best state-of-the-art (SOTA) performance so far. However, DNNs may not work reliably when presented with inputs of objects that are too different from the training data, referred to as out-of-distribution (OOD) objects, resulting in mediocre performance and undesired driving behavior.

For example, unreliable DNN models can lead to inaccurate outputs such as false negatives (=overlooked objects) and false class information (=wrong assumptions on object behavior). A common form of OOD detection is concept drift, which occurs when novel object classes, such as a shopping cart, have not or rarely occurred in the training data. To ensure safety, it is crucial to identify instances of OOD and take appropriate countermeasures:
For example, OOD objects can be identified and flagged, and the system can take suitable safety measures. System measures can be, e.g., alerting a human driver, or changing the system's behavior to avoid collisions with vulnerable road users (VRUs), such as pedestrians and cyclists. A crucial area of study in autonomous driving is the development of effective OOD detection techniques, with ongoing work to increase these techniques' precision and effectiveness in practical situations.

### SOTA of OOD Detection

OOD detection typically computes an anomaly score for input images or regions therein, like the regions of detected objects. Current state of the art methods for out-of-distribution detection rely on only using a single frame to compute the anomaly score of unknown objects. Another approach relies on using transformer object queries which produce instance segmentation mask for detecting OOD object:
In this model each object query acts as a one-vs-all classifier. Using these object queries it becomes feasible to segment OOD objects as the pixels that get high anomaly scores from each of the object queries.

### Uncertainties in OD

Statistically learned models for OD exhibit different kinds of inherent uncertainties in their predictions. Uncertainties may occur as follows:
- Aleatoric uncertainty: Uncertainty due to noise in the ground-truth labels, i.e., it is uncertain, whether the true label is well-defined.

### Examples:

∘ Localization fuzziness: For high-resolution images it is not clear at the boundary of objects, whether a pixel still belongs to the object or not.
∘ Semantic overlap: For similar classes it may sometimes not be clearly defined what class an object belongs to, e.g., a cyclist in the process of demounting their bike: When is it still a cyclist and when a pedestrian?

- Epistemic uncertainty: Uncertainty whether the correct model was learned for the given input. Examples:
   ∘ Decision boundaries: The model may only approximately have learned the true decision boundary between two classes, e.g., using decision features that do not match all corner cases. E.g., cats and dogs are frequently confused when the snout is not visible. Usually, in these cases, the class logits of the candidate classes are both high.
   ∘ Out-of-distribution cases: These are the cases of interest for out-of-distribution detection: Too little evidence from the training data supports a decision for the given sample, so any output could be possible. This is the case for concept drifts (=novel object classes, see above) as well as covariate drifts (=change in style of the input, e.g., other lighting conditions).

Some concepts use regions in the image, where the predictions about attributes (e.g., object class or object size) change untypically over time, to indicate an OOD object. The method quantifies the change in logits between different frames using metrics for the comparison of statistical distributions, such as the Kullback-Leibler divergence (KL). An underlying assumption of the method is that the change of class logits over time for decision boundaries of known classes, and at regions with localization fuzziness (object boundaries) is low: The respective classes (e.g., car vs. background) both have high class logit values that only slightly differ over frames. That way, this method can focus on true OOD objects instead of decision boundaries and localization fuzziness, which would also be captured by standard uncertainty estimation methods, leading to false positives of the OOD detection.

However, sometimes class logits do not change rapidly at decision boundaries. E.g., the DNN predictions may easily jump between confident predictions of the similar classes pedestrian and cyclist, e.g., when a person mounts their bike (actual class change) or a person pushes their bike (decision boundary). This problem gets amplified for standard DNNs, as these tend to be overly confident in their class logit predictions, fostering strong and fast jumps at decision boundaries. One drawback of logit-based OOD detection is that it rates the changes between logit scores of different classes equally, regardless of the class.

Embodiments of the present disclosure are based on the finding that semantic similarity of classes encodes world knowledge about whether classes realistically share a decision boundary or not. Semantically dissimilar classes are usually such classes that cannot easily be turned into one another (e.g., pedestrian and car); they share no semantic overlap, and no direct decision boundary. While any change in the probability distribution between two semantically similar classes (e.g., road and sidewalk, pedestrian and cyclist) may indicate other kinds of uncertainty, a change of the prediction between two dissimilar classes can be considered an anomaly and may indicate an OOD object.

According to an idea of the suggested approach, it is proposed to apply anomaly detection on the temporal evolvement of the class logits for OOD object detection considering a class semantics-based anomaly criterion, in order to avoid false positives of the OOD detection arising from valid class logit changes between semantically similar classes, and to harden the approach against overly confident model predictions.

Core idea for the class semantics-based anomaly criterion:
It is proposed to use a distance metric between semantic classes of logits of the same object to create a higher dimensional heatmap embedding of the probability distributions. This way one can use a more complex distance metric (e.g., Wasserstein distance or any metric for distribution comparison that respects distance) to quantify whether there is a strong change in the probability distribution (sign of OOD objects), or a weak change (sign of other uncertainties). To obtain the distance metric between the different semantic labels, one approach can be to measure the cosine similarity of the word embeddings---obtained, e.g., from the text encoder of a transformer (e.g., GPT2, or Bert) of the different labels.

The skilled person will appreciate that the proposed approach may not only be applied to classes but also to any other kind of attributes.

So, generally speaking, examples of the present disclosure may be summarized as follows:
Embodiments of the present disclosure provide a method for detecting an OOD object. The method comprises obtaining first sensor data of an object at a first point in time and second sensor data of the object at a second point in time. Further, the method comprises determining an attribute of the object using the first sensor data and determining the attribute of the object using the second sensor data. As well, the method provides for determining if the object is an OOD object based on a semantic similarity of the attribute for the first and the second sensor data.

The skilled person having benefit from the present disclosure will appreciate that the proposed method particularly allows a more reliable detection of OOD objects than other approaches. In particular, the proposed approach allows a better differentiation of uncertainties, also when dealing with overly confident models, making it possible to differentiate true OOD objects against uncertainty from localization fuzziness, decision boundaries, and semantic overlap.

One reason for this is that the proposed approach leverages temporal information, i.e., prediction changes over time: Current state of the art methods for OOD detection do not use temporal information, and this leads to unstable predictions and multiple false positives, as known constraints regarding object stability are not applied.

The skilled person will also appreciate that the proposed approach is model-agnostic, i.e., applicable to any OD function: Current OOD detectors are usually not model agnostic and depend on some special features of the model architecture.

Also, the proposed approach may be applied in different applications including, e.g., automotive applications but also medical applications.

OOD objects have shown to be especially critical for autonomous driving since traditional uncertainty estimation methods are noisy and unreliable when there is a significant difference between the input and the data the model was trained on.

In some embodiments, the attribute includes or corresponds to a class of the object, an objectness score, an object size.

In practice, determining if the object is an OOD object may comprise applying a semantic-aware metric to the attribute for the first and for the second sensor data to determine a semantic distance between attribute for the first and the attribute for the second sensor data. In doing so, the semantic distance may indicate the semantic similarity. Further, it may comprise determining that the object is an OOD object if the semantic distance exceeds a predefined semantic distance.

So, the semantic-aware metric allows a quantitative detection of OOD objects.

In some embodiments, the attribute for the first sensor data is represented by a first vector, the attribute for the second sensor data is represented by a second vector, and the semantic similarity is indicative of a similarity of the first and the second vector.

For example, the first and the second vector are indicative of word embeddings of the attribute for the first and the second data, and the method comprises determining the semantic similarity based on a semantic of the word embeddings of the attribute determined for the first and the second sensor data.

As the skilled person will appreciate, various semantic aware metrics may be applied to determine the semantic similarity of the attribute for the first and the second sensor data.

In practice, determining the semantic similarity may comprise determining the semantic similarity based on a cosine similarity of the word embeddings for the attribute for the first and the second sensor data.

As well, embodiments of the method may provide for a solution to make sure that the attribute for the first and the second sensor data are assigned to the same object. In some embodiments, the method, e.g., comprises tracking the object in the first and the second sensor data to associate the attribute for the first and the second sensor data to the same object.

As the skilled person will appreciate, the proposed approach may be not only applied for two but also for more sets of sensor data and that OOD objects may be detected more reliably for more sets of sensor data used for the OOD object detection, e.g., for more images.

Further embodiments provide a computer program comprising instructions which, when the computer program is executed by a computer, cause the computer to carry out the proposed method.

Other embodiments provide an apparatus comprising one or more interfaces for communication and a data processing circuit configured to execute the proposed method.

### Further embodiments provide a vehicle comprising the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 exemplarily shows a use case of OOD object detection;
Figs. 2 & 3 quantitatively visualize shortcomings of OOD detection concepts; and
Fig. 4 shows a flow chart schematically illustrating an embodiment of a method for detecting an OOD object;
Fig. 5 shows a block diagram schematically illustrating an embodiment of an apparatus according to the proposed approach.

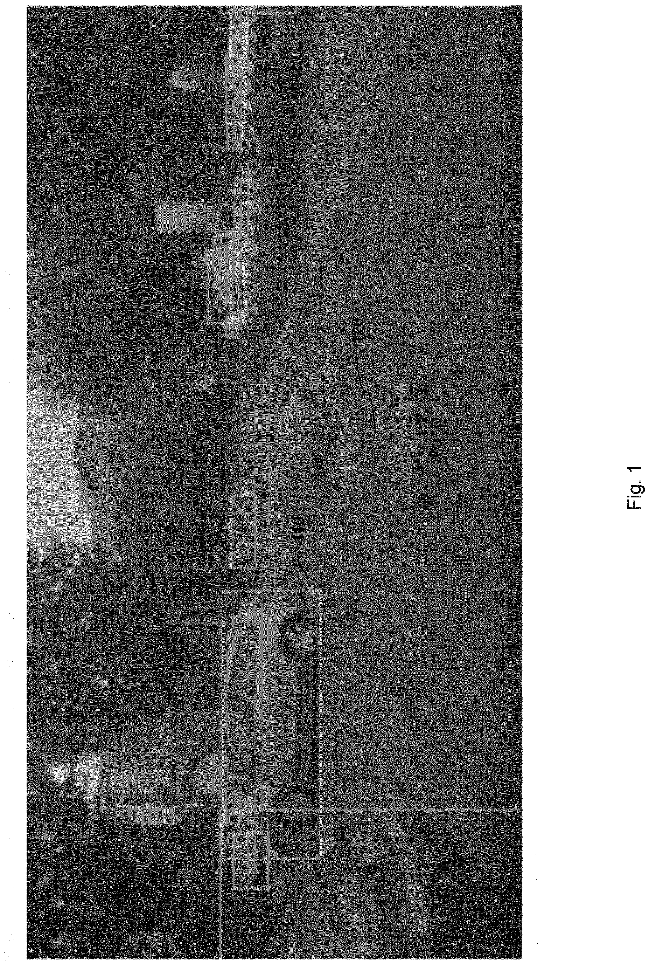

ADAS and HAD systems may be confronted with various environments and a lot of different objects. This makes it difficult to train an object detector for such applications sufficiently for all objects a vehicle may encounter. The proposed approach, therefore, may be particularly important in automotive applications to detect true OOD objects (see Fig. 1) and to avoid false positives in OOD object detection.

Fig. 1 exemplarily shows a use case of OOD object detection in an exemplary traffic situation. In this case, it may be desired to detect the true OOD object 120 and differentiate it from an in-distribution object 110 which has been learned sufficiently in a previous training, as follows:

### (1) Detection of a true OOD object

In the use case of Fig. 1, an autonomous car in a parking lot is trained to detect common road-users (pedestrians, cars, ... etc), e.g., object 110 which is a vehicle. A shopper leaves their shopping cart unattended, and it makes its way in the middle of the road. In practice, an autonomous driving system of the autonomous car may be not sufficiently trained to reliably classify the shopping cart which is why it may be considered an OOD object. If the autonomous driving system does not have an OOD detection system, it might not recognize the shopping cart 120, as it is not amongst the common road-user classes, and may collide with the shopping cart 120. An OOD detection system is supposed to detect that there is an OOD obstacle in the way that is possibly not correctly detected by the OD function, and the system could trigger a safety stop. Otherwise, if the shopping cart 120 is not detected as an OOD object, the autonomous car may collide with the shopping cart 120.

### (2) Exemplary use case for avoidance of false positives in OOD detection (not visualized):

A car driving on the highway behind a small bus. The DNN considers the bus very similar to a car, hence frequently switches between somewhat confident prediction that it is a car and that it is a bus. Some approaches may now flag the bus as an OOD object, a potentially dangerous obstacle like a piece of debris, due to the temporal inconsistency of the predictions. This would lead to:
- Case 1, level 2 autonomous system: The system utters one or several warnings to the driver, who gets annoyed or even distracted by the warning, risking mistrust in the system or - worse - an accident due to decreased driver attention; and/or
- Case 2, level 3+ autonomous system: The system initiates an evasion maneuver to avoid collision with the potential obstacle that is of unknown class and hence unknown movement behavior. The evasion can lead to decreased passenger comfort (slower speed than necessary, sudden jerks), or - worse - to an accident because other traffic agents cannot anticipate the car's unnecessary maneuver. In contrast, our amendment would respect the semantic similarity between bus and car, weighting the changes in the logits (car higher, then bus higher, then car again) much less. No OOD false positive would be identified, but instead just correctly an object that is somewhat in between car and bus.

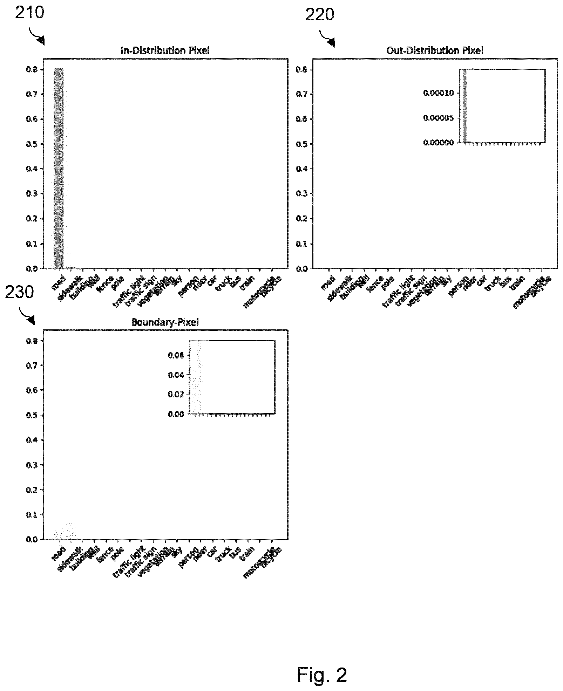

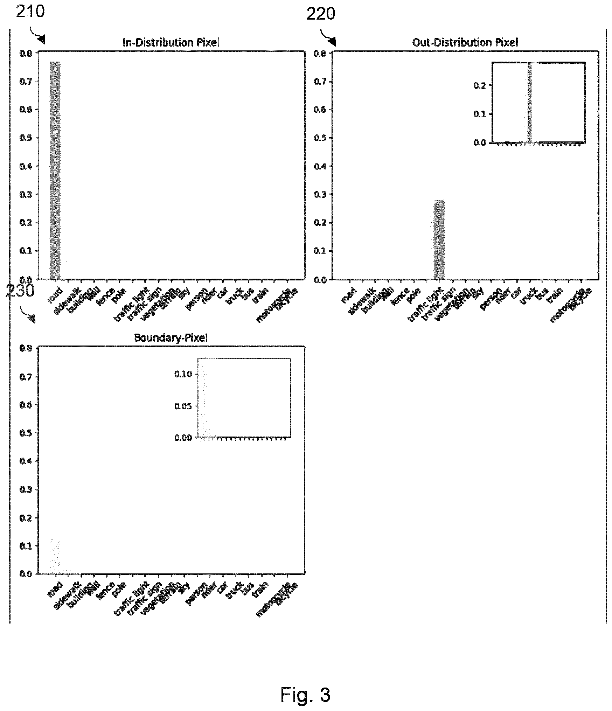

Further details to scenarios, where other approach may fail to detect the OOD object, are described in more detail with reference to Figs. 2 and 3.

Figs. 2 and 3 exemplarily show how the logits of pixels behave for an in-distribution pixel of a well-known object (see diagram 210), for a boundary-pixel (see diagram 230) somewhere at a boundary of two objects, and for an OOD object (see diagram 220).

So, diagram 210 (upper left) shows the logit score for an in-distribution pixel, diagram 220 (upper right) shows the logit score for a correctly detected OOD pixel, and diagram 230 (bottom left) shows the logit scores for a falsely detected OOD pixel (here it is a boundary pixel between road and side-walk).

Fig. 2 may relate to a first image at a first point in time and Fig. 3 may relate to a second image at a second point in time.
(1) In the first frame (Fig. 2) it can be seen that, for in-distribution pixels, logit scores are high, and for both OOD pixels and boundary pixels, logit scores are lower. So, it OOD objects are only detected based on the logit scores, one may incorrectly detect boundary pixels as being OOD (see Fig. 2).
(2) In the second frame (Fig. 3), it can be seen that the logit scores for in-distribution pixels don't change significantly, but while the logit scores for both the OOD pixel and boundary pixel are still low, there was a far greater semantic change in the true OOD pixels in comparison to the boundary pixels. For the boundary pixel the change was between classes road and sidewalk (two semantically similar classes), but for the true OOD pixel the change was between road and traffic light which are two semantically very different classes (see Fig. 3).

Embodiments of the present disclosure are therefore based on the finding that OOD objects may be detected based on a semantic deviation of an attribute assigned to an object for multiple sets of sensor data using a semantic-aware distribution comparison metric. As can be seen, this may allow to eliminate false positive detection.

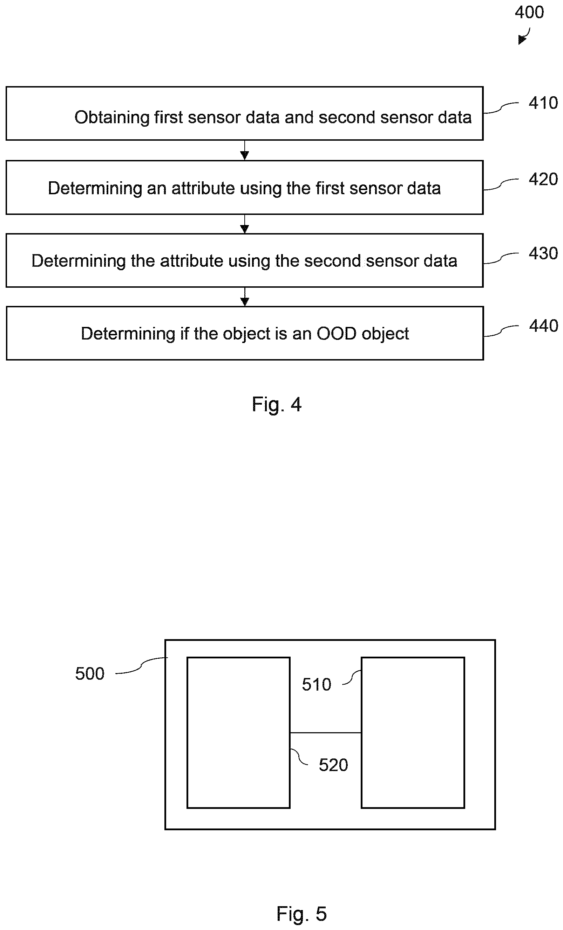

An exemplary embodiment of the approach is now described in more detail below with reference to Fig. 4.

Fig. 4 shows a flow chart schematically illustrating an embodiment of a method 400 for detecting an OOD object.

As can be seen, the method 400 comprises obtaining 410 first sensor data of an object at a first point in time and second sensor data of an object at a second point in time.

As the skilled person will understand, the sensor data may be obtained using any kind of environmental sensor such as a camera, radar, lidar system and/or any combination thereof. In practice, a vehicle, for example, is equipped with a camera system according video of the environment. In such applications, the first and the second sensor data each includes one or more images or frames of such a video.

Further, the method 400 comprises determining 420 an attribute of the object using the first sensor data and determining 430 the attribute of the object using the second sensor data. So, in other words, the attribute is determined for different sets of sensor data (the first and the second sensor data). In practice, e.g., first information on the attribute is determined based on the first sensor data. Then, second information on the same type of attribute (here: class) is determined (i.e., the attribute is determined again/anew) based on the second sensor data.

In practice, the attribute may be any kind of attribute that may be described in a word or a phrase with a semantic meaning. Exemplary attributes include the size (represented by "small", "medium", and "large" or "tall"), the so-called "objectness score" indicating whether or how likely a pixel relates to an object or not (to the background), or the class of an object.

The objectness score may be obtained using various approaches. An exemplary approach, e.g., provides for a mask segmentation network configured to obtain the objectness score. In connection with the present approach, the objectness score, e.g., indicates semantically how likely a respective pixel relates or belongs to an object, wherein the levels, e.g., are "very unlikely", "unlikely", "likely", or "very likely" (related to an object).

It is noted that for exemplary description, the proposed approach is explained only in connection with the object's class. However, the skilled person will understand that the explained examples may be analogously applied to other attributes.

Exemplary classes may vary depending on an application of the proposed approach. For automotive applications, exemplary classes, e.g., include the classes "car", "bus", "truck", "road", "sidewalk", "person", "bicycle", "motorcycle", "traffic light", and/or the like.

In doing so, the classes determined and assigned to the same object may vary over time. So, e.g., the class determined for the object may differ from each other.

In some cases, the classes may be very different in terms of their semantic/meaning. A first class determined based on the first sensor data, for example, is "car" and a second class determined based on the second sensor data, e.g., is "traffic light".

In other cases, the classes may be more similar in terms of their semantic/meaning (mistakeable). The first class, for example, is "road" and the second class is "sidewalk".

Embodiments of the present disclosure are based on the finding that the former, in practice, rather applies to OOD objects and the latter rather applies to well-known or well learned objects.

Accordingly, the method 400 provides for determining 440 if the object is an OOD object based on a semantic similarity of the attribute (e.g., class) determined from the first sensor data and the attribute (of the same type as the attribute determined from the first sensor data) determined from the second sensor data. In practice, e.g., it is determined that the object is an OOD object if the first and the second class is not similar enough and that the object is not an OOD object if the first and the second class are similar enough. For this, e.g., an appropriate threshold may be applied. The skilled person will understand that the threshold may depend on our kind of application of the proposed approach and, e.g., can be derived experimentally.

In some applications, an implementation of the proposed approach may provide for some preparation before operation. In some applications, a mapping of class logit values (class logits) into a higher-dimensional space is determined such that class similarities can be respected. In doing so, e.g., another dimension indicating the semantic or meaning of classes may be added. As a skilled person will understand, the mapping, e.g., maps a distribution of class logits over a (discrete) set of classes onto a distribution over a space with a distance metric.

Additionally, implementations may provide for further steps during operation:
One such step may comprise pixel-tracking to assign the first and second class to the same object. To this end, it is proposed to track the movement of input regions (e.g., pixels in an image) and the attributes (classes) predicted for these regions (e.g., object class) over several subsequent inputs (e.g., subsequent frames/images of the object) to obtain a temporal sequence of predicted attribute values (classes) per image region (that potentially moves in-between input frames) of a respective object.

For pixel tracking, an appropriate algorithm may create associations between a location in one input frame with a location in a previous input frame if they both belong to the same region in the input. An example would be an object moving through an image: Bounding boxes of this object in the subsequent frames should be associated, and constitute a time-aware input region. Some exemplary approaches for pixel tracking use optical flow, or Kalman filters.

A further step, then, may provide for mapping class logit distributions (e.g., pixel-wise probability distribution indicative of classes of objects) of each point to distributions over the space using (semantics-aware) distance metric. This space can be the same set of classes as before, but with information about the distance between each two classes.

In a further step, anomaly detection on temporal sequences is performed. In doing so, input regions where the temporal evolvement of the mapped class logit distributions is anomalous are identified using a distance-aware metric for distribution comparison.

To this end, it is proposed to obtain an indicator value whether the tracked input region belongs to an OOD object.

For this, an anomaly score calculation between two frames may be used and the anomaly score may be determined as follows:
The anomaly detection can be done on the temporal behavior of the logits that represent the class or class score outputs of the OD function. A resulting anomalousness score obtained per tracked input region can then be used as an indicator for OOD objects.

According to a first aspect, the anomalousness score may be obtained according to the proposed approach. For this, as previously stated, it is proposed to determine a change in how logit values (one predicted score per possible object class) are distributed over object classes and to use a distance-aware metric for comparing a distance between class logits of the same object for subsequent frames, e.g., the Wasserstein distance, in order to take into account class similarities for the OOD object detection.

According to a second aspect, additionally the anomalousness score may be obtained further based on a deviation of logits for the same object. E.g., if the logits change rapidly and/or greatly (e.g., more than a predefined threshold) the respective object can be considered an OOD object. In this way, a strange behavior of the class logits over time which may indicate an OOD object may be identified. This idea is based on the assumption that, if the object is known, the distribution of class scores stays stable over several frames, i.e., stays approximately the same even under the slight changes in inputs coming from movements.

In order to determine the change, it is proposed to obtain a score for the rate of change for a sequence of N previous frames. On this sequence, one can calculate the average (AVG) of the change between frames. This can be between subsequent frames, or between any pair of frames in the sequence. The number of frames can be chosen dynamically, or set to a fixed maximum; the maximum may be the number of previous frames to which the image region could be tracked back. The AVG change then serves as a score for the rate of change, with a high score indicating that the considered image region belongs to an OOD object. The score can now be compared to a threshold to obtain a decision about OOD or not OOD, with the decision threshold being a parameter. In doing so, multiple image regions can be processed in parallel to obtain the anomalousness score for multiple objects.

In some embodiments, the anomaly detection an OOD classification may be parameterized as laid out below:
Parametrizing anomaly detection & OOD classification:
To obtain better or optimal parameters for the anomalousness score determination and a subsequent OOD classification, one may use automatic parametrization according to a dedicated training data set and any standard ML technique (supervised or unsupervised) for training. In doing so, e.g., the thresholds for the OOD classification may be adapted appropriately.

In some embodiments, the proposed approach suggests the following optional extensions:
- Pre-filtering of input regions, e.g., restriction to only background regions or safety relevant input regions
- Inclusion of the semantics-aware distance metric into the loss to increase awareness of the DNN of the class semantics, and improve outputs behavior for applying our method: As factor to the loss: The penalty for updating the model is increased if the model confuses dissimilar classes. As regularization term when training on sequences: Penalize strong deviations of the class logit distributions for an object/region between two frames (taking semantic distance into account).

The proposed approach may be implemented in a computer program, a computer-implemented method, and/or in an apparatus, as laid out in more detail with reference to Fig. 5

Fig. 5 shows a block diagram schematically illustrating an embodiment of such an apparatus 500. The apparatus comprises one or more interfaces 510 for communication and a data processing circuit 520 configured to execute the proposed method.

In embodiments, the one or more interfaces 510 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 520 may correspond to or comprise any type of programable hardware. So, examples of the data processing circuit 520, e.g., comprise a memory, microcontroller, field programable gate arrays, one or more central, and/or graphical processing units. To execute the proposed method, the data processing circuit 520 may be configured to access or retrieve an appropriate computer program for the execution of the proposed method from a memory of the data processing circuit 520 or a separate memory which is communicatively coupled to the data processing circuit 520.

In practice, the proposed apparatus may be installed on a vehicle. So, embodiments may also provide a vehicle comprising the proposed apparatus. In implementations, the apparatus, e.g., is part or a component of an ADAS or the like.

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method for detecting an out-of-distribution, OOD, object, the method comprising:
obtaining first sensor data of an object at a first point in time and second sensor data of the object at a second point in time;
determining an attribute of the object using the first sensor data;
determining the attribute of the object using the second sensor data; and
determining if the object is an OOD object based on a deviation between the attribute for the first and the second sensor data.

2. The method of claim 1, wherein determining if the object is an OOD object comprises:
applying a semantic-aware metric to the attribute for the first and the second sensor data to determine a semantic distance between the attribute for the first and the second sensor data, wherein the semantic distance indicates the semantic similarity; and
determining that the object is an OOD object if the semantic distance exceeds a predefined semantic distance.

3. The method of claim 1 or 2, wherein the attribute for the first sensor data is represented by a first vector, the attribute for the second sensor data is represented by a second vector, and the semantic similarity is indicative of a similarity of the first and the second vector.

4. The method of claim 3, wherein the first and the second vector are indicative of word embeddings of the attribute for the first and the second sensor data, and wherein the method comprises determining the semantic similarity based on a semantic of the word embeddings of the attribute for the first and the second sensor data.

5. The method of claim 4, wherein determining the semantic similarity comprises determining the semantic similarity based on a cosine similarity of the word embeddings for the attribute for the first and the second sensor data.

6. The method of any one of the preceding claims, wherein the attribute includes or corresponds to a class of the object, an objectness score, an object size.

7. The method of any one of the proceeding claims, wherein the method comprises tracking the object in the first and the second sensor data to associate the attribute for the first and the second sensor data to the same object.

8. A computer program comprising instructions which, when the computer program is executed by a computer, cause the computer to carry out the method of any one of the preceding claims.

9. An apparatus comprising:
one or more interfaces for communication; and
a data processing circuit configured to execute the method of any one of the claims 1 to 7.

10. A vehicle comprising the apparatus of claim 9.
